# EUROPEAN PATENT SPECIFICATION

(11) **EP 2 607 152 B1**
(45) Date of publication and mention of the grant of the patent: **30.07.2014**
(21) Application number: 11194557.2
(22) Date of filing: 20.12.2011
(51) Int. Cl.: B60N 2/24, B60N 2/42

(54) **Vehicle comprising a seat with a squab and a chest support**
Fahrzeug mit einem Sitz mit einer Rückenlehne und einer Bruststütze
Véhicule comportant un siège avec un dossier et support thoracique

(43) Date of publication of application: 26.06.2013
(73) Proprietor: Volvo Car Corporation, 40531 Göteborg (SE)
(72) Inventor: Stenvall, Lars, 45991 Ljungskile (SE)
(74) Representative: Kraenzmer, Martin

(56) References cited:
- EP-A1- 0 663 316
- DE-A1- 19 932 801
- US-A1- 2009 278 390

## Description

### TECHNICAL FIELD

The present disclosure relates to a vehicle comprising a seat with a squab and a chest support.

### BACKGROUND

Vehicles are normally provided with seats offering the driver and potential passengers a possibility to sit down while being transported. A conventional seat in a car comprises a squab for receiving the bottom of a person and a backrest for receiving the back of the person. For safety reasons, a safety belt may be provided in order to secure the person in the seat in case of a collision.

Such seats may however often be a bit difficult to get in and out of, due to that the seat may be quite low and somewhat rearward leaning. It also takes some time and effort to fasten the safety belt.

Buses are provided with seats for the passengers. The seats normally comprise a squab for receiving the bottom of a person and a backrest for receiving the back of the person. The squab and the backrest may be integrated as one unit. Many buses lack safety belts or the passengers choose not to use them. The passengers thus risk being thrown out of the seat in case of a collision.

Conventional two-wheeled vehicles, such as mopeds, motorcycles or scooters, are provided with a seat; however there is normally only a support for the bottom and not for the upper part of the body. There is no safety means, such as a safety belt, to hold the driver in case of a collision. In addition, conventional two-wheeled vehicles do not provide any weather protection.

### SUMMARY

The object of the present disclosure is to overcome or ameliorate at least one of the disadvantages of the prior art, or to provide a useful alternative.

It is desirable to provide a vehicle comprising seats, which are easy to get in and out of, while at the same time providing means for safety and/or comfort for the seated persons.

A seat comprising a backrest, a chest support and a leg gap provided between the chest support and a squab is disclosed in DE-A-19932801.

Thus, according to the present invention there is provided a vehicle comprising at least one seat, the at least one seat having no backrest comprising
- a squab for receiving a bottom of a person,
- a chest support, being directly or indirectly connected to the squab, such that the chest support is located above a front region of the squab, and
- a leg gap, provided in between the chest support and the squab and adapted for receiving the legs of a person.

The seat gives the driver an upright seating position offering good visibility. In addition, it is easy to get in and out of the vehicle. The seat may be entered from behind or from the side. Further, the vehicle according to the disclosure may be made shorter than a conventional vehicle for a corresponding number of persons, resulting in a more compact vehicle occupying less space in the street.

The person seated in the seat may support his/her chest against the chest support, if desired, contributing to the comfort. In addition, the chest support will distribute the crash loads over the chest in case of a collision. Due to the size of the chest support, the area of which is considerably larger than the area of the portion of a conventional seat belt running over the chest of a passenger, the crash loads will be distributed over a larger portion of the chest, thus reducing the risk of potential injury of the passenger. It would be possible to omit the seatbelts from a vehicle according to the disclosure, since the persons in the vehicle will be protected by the chest support in case of a collision.

The vehicle may be a self-propelled vehicle, e.g. by having its own engine. Preferably, the vehicle has an electrical engine, but other kinds of engines are also possible, such as engines using liquid or gaseous fuel. The vehicle may be adapted for use on roads and in streets. As an alternative, or as a complement, it may be adapted for use on rails.

The vehicle may have at least one seat, i.e. a seat intended for a driver. Any number of additional seats intended for passengers may be available, such as one, two, three, four, five or more. Hence the number of seats corresponds to the number of seats in known vehicles, such as scooters, cars, vans or buses. The seats may be located in a passenger compartment having a roof, a floor and walls, such that the persons are not exposed to the weather conditions outside.

When comparing the vehicle of the disclosure with a conventional vehicle for a corresponding number of persons, it may be noted that the upright seating position makes it possible to make a more compact vehicle as compared to a conventional vehicle for the same number of persons.

The front region of the squab is related to the front of the vehicle, i.e. the end of the vehicle being in the normal direction of movement for the vehicle.

The leg gap has a gap width, which is suitable for receiving the legs of a person. The height level of the squab and/or the chest support relative to the vehicle floor may be adjustable, thereby adjusting the gap width and/or the height of the leg gap relative to the floor, such that the leg gap may be adapted for each person individually.

The squab may be padded or unpadded. The chest support may also be padded or unpadded. The squab and chest are made of materials normally used for seats in a passenger vehicle, which are known to the skilled person.

A direct connection is defined as a connection extending directly between the squab and the chest support without passing another object, e.g. in the form of a bar extending between the squab and the chest support. Such a bar may connect a lower region of the chest support and the front region of the squab, thereby spanning over the leg gap, giving a short and stable connection. As an alternative the bar may connect a lateral region of the chest support and a lateral region of the squab, making it easy to get in and out of the seat.

An indirect connection means that the squab and the seat are connected to each other via at least one additional object, which may be the vehicle body.

The vehicle may further comprise at least one longitudinal bar, the chest support and/or the squab being attachable to the longitudinal bar to form the indirect connection between the chest support and the squab. The squab and/or chest support may also be connected to the floor of the vehicle via a support column.

The chest support has a size adapted to cover at least 20%, preferably at least 35% and most preferably at least 50% of the chest of a person seated in the seat. The crash loads arising in a potential collision, are thus distributed over a larger area, than would be the case with a conventional seat belt.

The chest support has an arcuate shape adapted to the curvature of a human chest. The chest support is normally adapted to be suitable for an adult. The chest support may be exchangeable, such that a smaller chest support may be used for children.

The squab may be pear-shaped having the narrow region of the pear-shape located below the chest support. The pear-shape makes it easy to get in and out of the seat.

The gap width of the leg gap and/or its height relative to the floor may be adjustable by adjusting the height level of the squab and/or the chest support relative to the floor.

The squab may be rotatable around an axis extending essentially in a vertical direction of the vehicle. The rotation axis may coincide with the center of the support column, in case the squab is supported in that way.

The chest support may further comprise an airbag. In a preferred embodiment the airbag of the chest support is located such that it inflates in a forward direction of the vehicle, thereby protecting the person sitting in front of it in case of a rear collision, assuming that there at least two rows of seats. A row is defined as one or more seats being located laterally next to each other in a vehicle. Additional airbags may be located in the vehicle body, e.g. at the rear of the vehicle to protect the persons sitting in the rear-most row. There may also be airbags protecting in case of side collisions.

The chest support further may comprise a docking station for portable electronic equipment, such as a smart-phone, tablet computer, navigation system etc. Therefore, the chest support may have electrical connection to the rest of the vehicle, such that the docking station may be power-supplied from a battery arrangement of the vehicle. In addition, the docking station may have connection, wired or wireless, with the infotainment system of the vehicle.

The vehicle may further comprise a steering device, providing at least a steering function, an acceleration function and a braking function. There is thus no need for any foot pedals, which may be omitted. Such an arrangement of the motion control contributes to the vehicle according to the disclosure being shorter than a conventional vehicle for the same number of persons. Preferably all, or essentially all, motion controls are provided in the steering device. A vehicle having essentially all motion controls provided in the steering device, may have all motion controls needed for normal driving provided in the steering device, while e.g. a parking brake may be separate.

In an embodiment, the squab and/or chest support extends from one lateral wall to another lateral wall of the vehicle, for example from a pillar of the lateral wall to a corresponding pillar in the other lateral wall. Thereby the vehicle body is reinforced, which for example could be favourable in case of a side collision. This configuration may be used for a vehicle having only one seat in a row, or having two, three, four or more seats in a row.

### BRIEF DESCRIPTION OF THE DRAWINGS

The present invention will hereinafter be further explained by means of non-limiting examples with reference to the appended drawings wherein:
- Fig. 1: is a schematic view of a vehicle according to the invention;
- Fig. 2: is a schematic view of a seat arrangement according to the invention;
- Fig. 3: illustrates a way of directly connecting a chest support and a squab;
- Fig. 4: illustrates an alternative way of directly connecting a chest support and a squab;
- Fig. 5: illustrates a way of indirectly connecting a chest support and a squab;
- Fig. 6: illustrates an alternative way of indirectly connecting a chest support and a squab;
- Fig. 7: illustrates a third way of indirectly connecting a chest support and a squab;
- Fig. 8: illustrates a fourth way of indirectly connecting a chest support and a squab.

It should be noted that the appended drawings are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, defined by the appended claims.

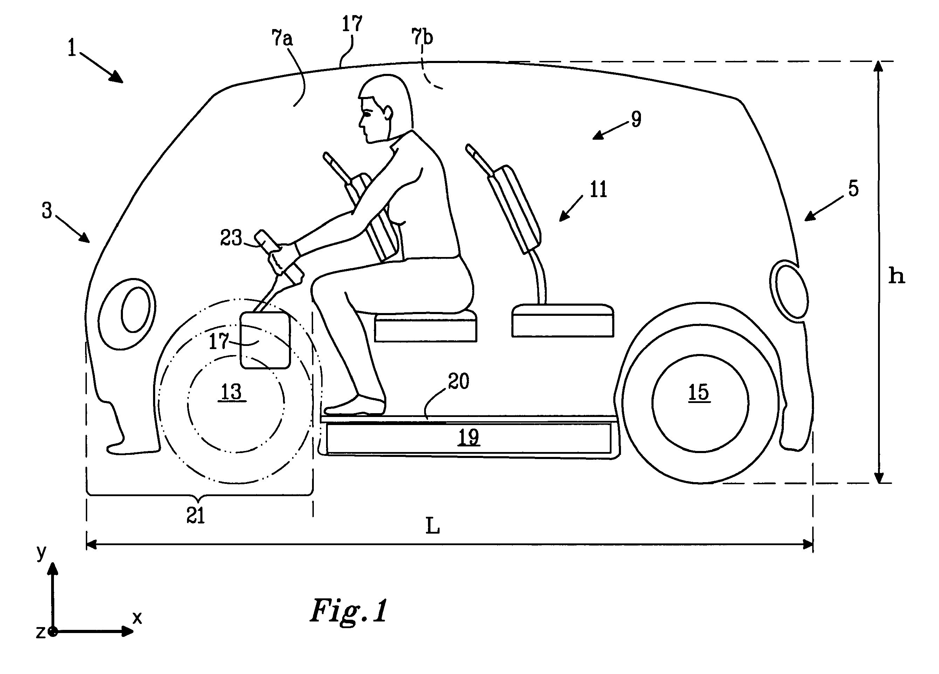

Figure 1 schematically illustrates a passenger vehicle 1 according to the invention. The vehicle has a front end 3, a rear end 5. The vehicle 1 comprises a seat arrangement 9. Any number of seats 11 may be available, such as one, two, three, four, five or more; the number of seats corresponding to the number of seats in known vehicles, such as scooters, cars, vans or buses. In the illustrated embodiment the seat arrangement 9 comprises seats 11 for four persons, two seats are arranged in a front row and two seats in a back row. As can be gleaned from Figure 1, the seats 11 are located between the front wheels 13 and back wheels 15 of the vehicle 1. The seats 11 are located in a passenger compartment comprising a roof 17, a floor 20 and lateral walls 7a, 7b.

The vehicle 1 is propelled by electricity. It has an electrical engine 17 and at least one battery arrangement 19. The battery arrangement 19 is located below the seats 11 with a top plane being provide on top of the battery arrangement 19 forming the floor 20 of the passenger compartment. The seat arrangement 9 gives the driver an upright seating position offering good visibility. In addition, it is easy to get in and out of the vehicle. The seat 11 may be entered from behind or from the side.

In the illustrated example, a driver and any potential passenger/s are located in a passenger compartment having a roof, a floor and walls, such that the persons are not exposed to the weather conditions outside. The seats are arranged such that the persons sitting in them are facing forward, i.e. in the normal running direction of the vehicle 1.

When comparing the vehicle 1 of Figure 1 with a conventional car for a corresponding number of persons, it may be noted that the length L of the vehicle is shorter and the height h is higher. In addition, a vehicle according to the present invention has less weight than a corresponding conventional car. Thereby the weight of the battery arrangement 19 may be reduced as compared to a conventional electrical car resulting in further weight reduction.

No seat belts are provided in Figure 1. Optionally, seat belts like the ones used in conventional cars may be used.

The vehicle 1 offers a crash zone 21 in front of the driver. Motion is controlled from a steering device 23. There is thus no need for any pedals, and they have been omitted. This makes it possible to increase the length of the crash zone 21 as compared to in a conventional vehicle, since the feet will not be placed on the pedals, i.e. in a forward direction, but instead more or less right below the knees. Such an arrangement of the motion control contributes to the vehicle 1 according to the invention being shorter than a conventional vehicle for the same number of persons.

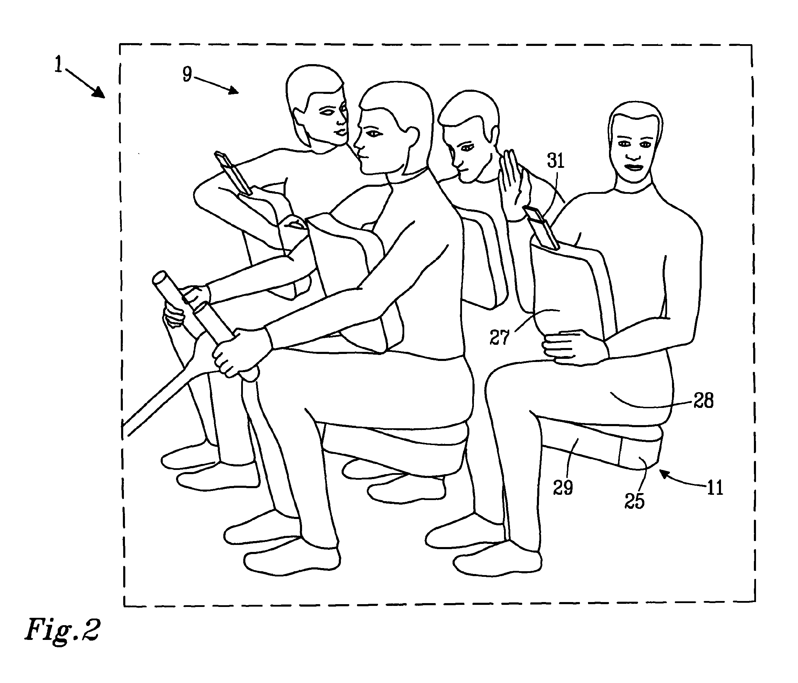

Figure 2 schematically illustrates the seat arrangement 9 of the vehicle 1 of Figure 1. The illustrated seat arrangement comprises four seats 11. Each of them comprises a squab 25 for receiving the bottom of a person and a chest support 27. A leg gap 28 is provided between the squab 25 and the chest support 27. The person seated in the seat 11 may support his/her chest against the chest support 27, if desired, contributing to the comfort for the passenger. In addition, the chest support 27 will distribute the crash loads over the chest in case of a collision. Due to the size of the chest support 27, the area of which is considerably larger than the area of the portion of a conventional seat belt running over the chest of a passenger, the crash loads will be distributed over a larger portion of the chest, thus reducing the risk of potential injury of the passenger. The chest support 27 has an arcuate shape adapted to the chest of a passenger. The chest support 27 covers at least 20%, preferably at least 35% and most preferably at least 50% of the chest. The squab 25 is pear-shaped having the narrow region of the pear-shape located at the front region 29 of the squab 25.

The chest support 27 comprises a docking station 31 for docking of a smart-phone, tablet computer, navigation system etc. Therefore, the chest support 27 may have electrical connection to the rest of the vehicle 1, such that the docking station 31 may be power-supplied from the battery arrangement 19 of the vehicle 1. In addition, the docking station 31 may have connection, wired or wireless, with the infotainment system of the vehicle.

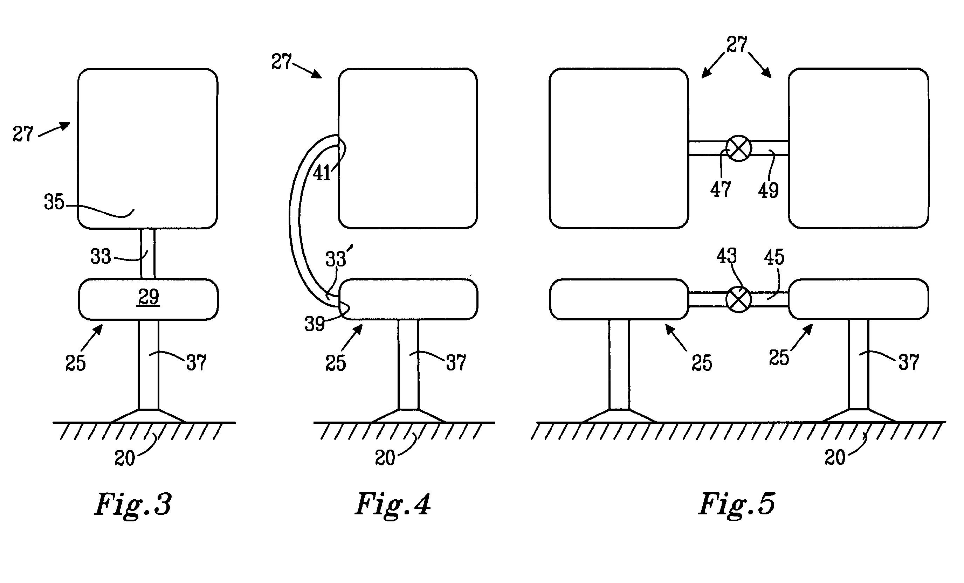

The chest support 27 is directly or indirectly connected to the squab 25. A number of ways are described in Figures 3-6 below.

In Figure 3, a bar 33 is provided between a lower region 35 of the chest support 27 and the front region 29 of the squab 25, thereby spanning over the leg gap 28 and offering a direct connection between the squab 25 and the chest support 27. With this configuration, the passenger is intended to sit with one leg at either side of the bar 33. The squab 25 is connected to the floor 20 of the vehicle 1 by means of a support column 37, which carries the weight of the person to be seated in the seat. The seat 11 may be rotatable around the support column 37, making it easy to get in and out of the vehicle. The seat may also be turned 180 degrees, such that the person in the seat may sit face to face with persons sitting in the seats in the row behind. The support column 37 may be height-adjustable relative to the floor 20. Further, also the chest support 27 may be height-adjustable relative to the floor 20. Thereby it is possible to personalize the seat 11 I for a particular individual.

Figure 4 shows an alternative configuration offering a direct connection, wherein a curved bar 33' connects a lateral region 41 of the squab 25 and a lateral region 39 of the chest support 27. The curved bar 33' may, as an option, be fixed to a bar (not illustrated) going in the longitudinal direction of the vehicle 1, e.g. in the centre of the vehicle, at an arbitrary height from the floor, e.g. in a height corresponding to that of the squab 25.

Alternatively, the squab 25 and the chest support 27 may be indirectly connected as in Figure 5, wherein the squab 25 is connected to a lower central longitudinal bar 43 of the vehicle 1 by means of a lower lateral bar 45. In a similar way, the chest support 27 is connected to an upper central longitudinal bar 47 of the vehicle 1 by means of an upper lateral bar 49. The lower 43 and upper 47 central bars are in turn connected to the vehicle. The squab 25 and the chest support 27 are connected via the body of the vehicle 1, i.e. indirectly connected. Since the weight of the passenger may be carried by the lower lateral bar 45, the support column 37 may be dispensed with. As an option, the lower 43 and/or upper 47 central bar may extend longitudinally through the whole passenger compartment, thereby reinforcing the vehicle.

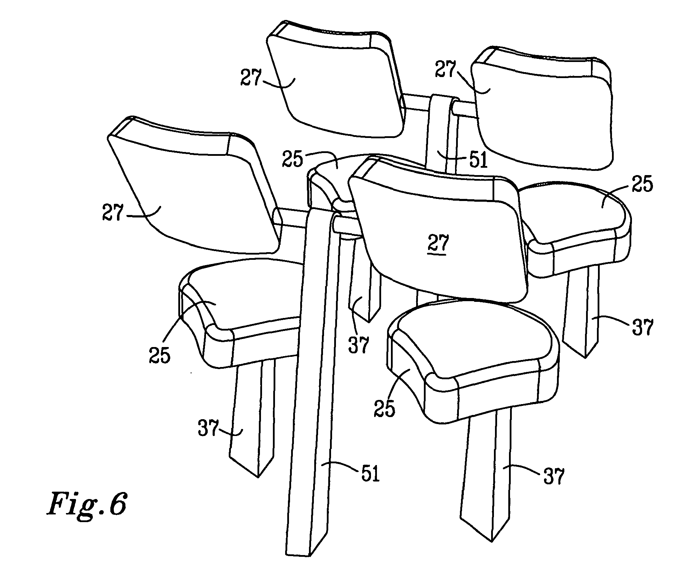

Figure 6 illustrates an alternative indirect connection. The chest supports 27 are pair-wise connected to the floor by means of a pillar 51, which in the exemplified four seat vehicle may be located at the longitudinal centre line. The squabs 25 are connected by the support columns 37 to the floor. As an alternative, the squabs may also be pair-wise connected to the same pillar 51. There may also be one pillar arranged for each seat.

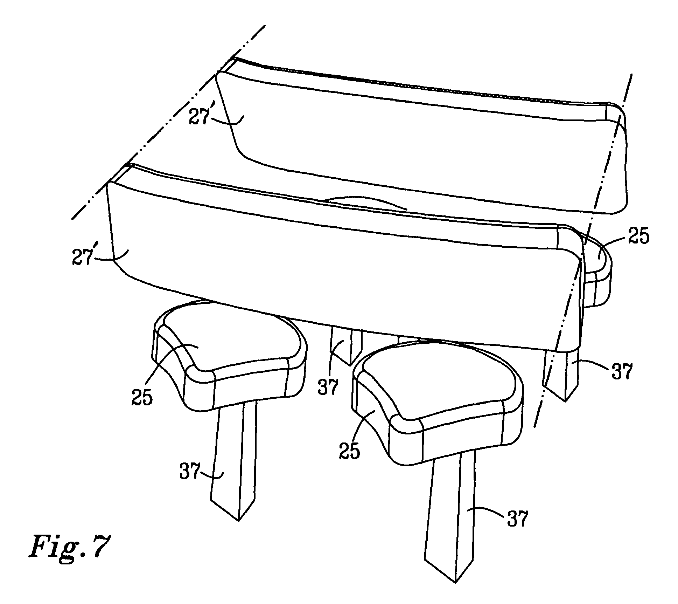

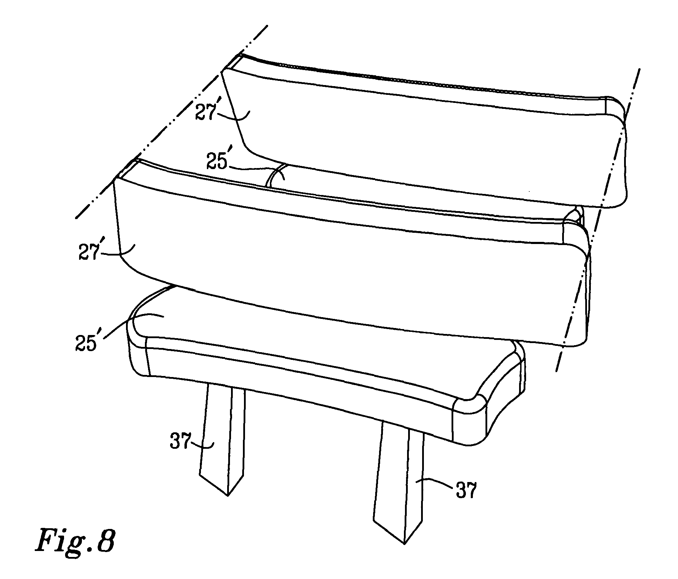

Yet another alternative of indirect connection is illustrated in Figure 7. The example shows that two seats are arranged in a row. The seats comprise a squab 25 each and a common chest support 27'. The common chest support 27' may be arranged to extend from one lateral wall 7a to the other lateral wall 7b of the vehicle 1. Thereby, the vehicle body is reinforced, which for example could be favourable in case of a side collision. As an alternative, or a complement, also the squab may be arranged as a squab 25' common for both seats, as illustrated in Figure 8. If the common squab 25' extends from one lateral wall 7a to the other lateral wall 7b of the vehicle 1, the vehicle 1 will be reinforced in a similar way as for the common chest support 27'.

A squab 25, and/or a chest support 27' extending from one lateral wall 7a to the other lateral wall 7b of the vehicle 1, may also be used for a vehicle having only one seat 11 in each row, or having three, four or more seats 11 in a row.

Further modifications of the invention within the scope of the appended claims are feasible. As such, the present invention should not be considered as limited by the embodiments and figures described herein. Rather, the full scope of the invention should be determined by the appended claims, with reference to the description and drawings.

## Claims

1. A vehicle (1) comprising at least one seat (11) having no backrest, said at least one seat (11) comprising
- a squab (25) for receiving a bottom of a person,
- a chest support (27), being directly or indirectly connected to said squab (25), such that said chest support (27) is located above a front region (29) of said squab (25), and
- a leg gap (28), provided in between said chest support (27) and said squab (25) and adapted for receiving the legs of a person.

2. The vehicle (1) according to claim 1, wherein said chest support (27) is directly connected to said squab (25) by means of a bar (33, 33').

3. The vehicle (1) according to claim 2, wherein said bar (33) connects a lower region (35) of said chest support (27) and said front region (29) of said squab (25), thereby spanning over said leg gap (28).

4. The vehicle (1) according to claim 2, wherein said bar (33') connects a lateral region (41) of said chest support (27) and a lateral region (39) of said squab (25).

5. The vehicle (1) according to claim 1, wherein said chest support (27) is indirectly connected to said squab (25), by said chest support (27) and said squab (25) being connected to a body of said vehicle (1).

6. The vehicle (1) according to claim 5, wherein said vehicle (1) further comprises at least one longitudinal bar (43, 47), said chest support (27) and/or said squab (25) being attachable to said longitudinal bar (43, 47) to form said indirect connection between said chest support (27) and said squab (25).

7. The vehicle (1) according to any one of the preceding claims, wherein said chest support (27) has a size adapted to cover at least 20%, preferably at least 35% and most preferably at least 50% of the chest of a person seated in said seat (11).

8. The vehicle (1) according to any one of the preceding claims, wherein said chest support (27) has an arcuate shape adapted to the curvature of a human chest.

9. The vehicle (1) according to any one of the preceding claims, wherein said squab (25) is pear-shaped having the narrow region of the pear-shape located below said chest support (27).

10. The vehicle (1) according to any one of the preceding claims, wherein the gap width of said leg gap (28) and/or its height relative to a floor of said vehicle is adjustable by adjusting the height level of said squab (25) and/or said chest support (27).

11. The vehicle (1) according to any one of the preceding claims, wherein said squab (25) is rotatable around an axis extending essentially in a vertical direction of said vehicle (1).

12. The vehicle (1) according to any one of the preceding claims, wherein said chest support (27) further comprises an airbag.

13. The vehicle (1) according to any one of the preceding claims, wherein said chest support (27) further comprises a docking station (31) for portable electronic equipment.

14. The vehicle (1) according to any one of the preceding claims, wherein said vehicle (1) further comprises a steering device (23) providing at least a steering function, an acceleration function and a braking function.

15. The vehicle (1) according to any one of the preceding claims, said vehicle (1) comprising lateral walls (7a, 7b), said squab (25') and/or said chest support (27') extending from one lateral wall (7a) to the other lateral wall (7b) of the vehicle (1).

16. The vehicle (1) according to any one of the preceding claims, wherein said at least one seat (11) is for adults.

17. The vehicle (1) according to any one of the preceding claims, wherein said at least one seat (11) is a driver's seat.

## Patentansprüche

1. Fahrzeug (1), umfassend mindestens einen Sitz (11) ohne Rückenlehne, wobei der eine Sitz (11) Folgendes umfasst:
- eine Sitzfläche (25) zum Aufnehmen einer Unterseite einer Person,
- eine Bruststütze (27), die direkt oder indirekt mit der Sitzfläche (25) verbunden ist, sodass die Bruststütze (27) oberhalb eines vorderen Bereichs (29) der Sitzfläche (25) angeordnet ist, und
- eine Beinspalte (28), die zwischen der Bruststütze (27) und der Sitzfläche (25) bereitgestellt ist und zum Aufnehmen der Beine einer Person ausgelegt ist.

2. Fahrzeug (1) nach Anspruch 1, wobei die Bruststütze (27) über eine Stange (33, 33') direkt mit der Sitzfläche (25) verbunden ist.

3. Fahrzeug (1) nach Anspruch 2, wobei die Stange (33) einen unteren Bereich (35) der Bruststütze (27) und des vorderen Bereichs (29) der Sitzfläche (25) verbindet und sich dadurch über die Beinspalte (28) spannt.

4. Fahrzeug (1) nach Anspruch 2, wobei die Stange (33') einen seitlichen Bereich (41) der Bruststütze (27) und einen seitlicher Bereich (39) der Sitzfläche (25) verbindet.

5. Fahrzeug (1) nach Anspruch 1, wobei die Bruststütze (27) indirekt mit der Sitzfläche (25) verbunden ist, indem die Bruststütze (27) und die Sitzfläche (25) mit einem Körper des Fahrzeugs (1) verbunden sind.

6. Fahrzeug (1) nach Anspruch 5, wobei das Fahrzeug (1) ferner mindestens eine Längsstange (43, 47) umfasst, wobei die Bruststütze (27) und/oder die Sitzfläche (25) an der Längsstange (43, 47) befestigt werden können, um eine indirekte Verbindung zwischen der Bruststütze (27) und der Sitzfläche (25) zu bilden.

7. Fahrzeug (1) nach einem der vorherigen Ansprüche, wobei die Bruststütze (27) eine Größe aufweist, die zum Abdecken von mindestens 20 %, vorzugsweise von mindestens 35 % und am meisten bevorzugt von mindestens 50 % der Brust einer Person ausgelegt ist, die auf dem Sitz (11) sitzt.

8. Fahrzeug (1) nach einem der vorherigen Ansprüche, wobei die Bruststütze (27) eine bogenförmige Form aufweist, die der Krümmung der menschlichen Brust angepasst ist.

9. Fahrzeug (1) nach einem der vorherigen Ansprüche, wobei die Sitzfläche (25) birnenförmig ist, wobei der schmale Bereich der Birnenform unterhalb der Bruststütze (27) angeordnet ist.

10. Fahrzeug (1) nach einem der vorherigen Ansprüche, wobei die Spaltbreite der Beinspalte (28) und/oder ihre Höhe in Bezug auf einen Boden des Fahrzeugs durch Einstellen der Höhe der Sitzfläche (25) und/oder der Bruststütze (27) einstellbar ist.

11. Fahrzeug (1) nach einem der vorherigen Ansprüche, wobei die Sitzfläche (25) um eine Achse drehbar ist, die sich im Wesentlichen in eine vertikale Richtung des Fahrzeugs (1) erstreckt.

12. Fahrzeug (1) nach einem der vorherigen Ansprüche, wobei die Bruststütze (27) ferner einen Airbag umfasst.

13. Fahrzeug (1) nach einem der vorherigen Ansprüche, wobei die Bruststütze (27) ferner eine Dockstation (31) für tragbare elektronische Geräte umfasst.

14. Fahrzeug (1) nach einem der vorherigen Ansprüche, wobei das Fahrzeug (1) ferner eine Lenkvorrichtung (23) umfasst, die mindestens eine Lenkfunktion, eine Beschleunigungsfunktion und eine Bremsfunktion bereitstellt.

15. Fahrzeug (1) nach einem der vorherigen Ansprüche, wobei das Fahrzeug (1) seitliche Wände (7a, 7b) umfasst, wobei sich die Sitzfläche (25') und/oder die Bruststütze (27') von einer seitlichen Wand (7a) zu der anderen seitlichen Wand (7b) des Fahrzeugs (1) erstrecken.

16. Fahrzeug (1) nach einem der vorherigen Ansprüche, wobei der mindestens eine Sitz (11) für Erwachsene ist.

17. Fahrzeug (1) nach einem der vorherigen Ansprüche, wobei der mindestens eine Sitz (11) ein Fahrersitz ist.

## Revendications

1. Véhicule (1) comprenant au moins un siège (11) ne comportant pas de dossier, ledit au moins un siège (11) comprenant
- une assise (25) destinée à recevoir le derrière d'une personne,
- un support thoracique (27), raccordé directement ou indirectement à ladite assise (25), de telle sorte que ledit support thoracique (27) soit situé au-dessus d'une région avant (29) de ladite assise (25), et
- un espace pour les jambes (28), se trouvant entre ledit support thoracique (27) et ladite assise (25) et conçu pour accueillir les jambes d'une personne.

2. Véhicule (1) selon la revendication 1, dans lequel ledit support thoracique (27) est directement raccordé à ladite assise (25) au moyen d'une barre (33, 33').

3. Véhicule (1) selon la revendication 2, dans lequel ladite barre (33) raccorde une région inférieure (35) dudit support thoracique (27) et ladite région avant (29) de ladite assise (25), de sorte qu'elle s'étend en travers dudit espace pour les jambes (28).

4. Véhicule (1) selon la revendication 2, dans lequel ladite barre (33') raccorde une région latérale (41) dudit support thoracique (27) et une région latérale (39) de ladite assise (25).

5. Véhicule (1) selon la revendication 1, dans lequel ledit support thoracique (27) est indirectement raccordé à ladite assise (25), en vertu du fait que ledit support thoracique (27) et ladite assise (25) sont raccordés à une carrosserie dudit véhicule (1).

6. Véhicule (1) selon la revendication 5, ledit véhicule (1) comprenant en outre au moins une barre longitudinale (43, 47), ledit support thoracique (27) et/ou ladite assise (25) pouvant être attachés à ladite barre longitudinale (43, 47) afin de former ledit raccordement indirect entre ledit support thoracique (27) et ladite assise (25).

7. Véhicule (1) selon l'une quelconque des revendications précédentes, dans lequel ledit support thoracique (27) présente une taille appropriée pour recouvrir au moins 20 %, de préférence au moins 35 % et le plus préférablement au moins 50 % du thorax d'une personne assise sur ledit siège (11).

8. Véhicule (1) selon l'une quelconque des revendications précédentes, dans lequel ledit support thoracique (27) présente une forme arquée adaptée à la courbure d'un thorax humain.

9. Véhicule (1) selon l'une quelconque des revendications précédentes, dans lequel ladite assise (25) est piriforme, la région étroite de la forme de poire étant située en dessous dudit support thoracique (27).

10. Véhicule (1) selon l'une quelconque des revendications précédentes, dans lequel la largeur d'espace dudit espace pour les jambes (28) et/ou sa hauteur par rapport à un plancher dudit véhicule est réglable en réglant la position en hauteur de ladite assise (25) et/ou dudit support thoracique (27).

11. Véhicule (1) selon l'une quelconque des revendications précédentes, dans lequel ladite assise (25) peut tourner autour d'un axe s'étendant essentiellement dans une direction verticale dudit véhicule (1).

12. Véhicule (1) selon l'une quelconque des revendications précédentes, dans lequel ledit support thoracique (27) comprend en outre un coussin gonflable de sécurité.

13. Véhicule (1) selon l'une quelconque des revendications précédentes, dans lequel ledit support thoracique (27) comprend en outre une station d'accueil (31) pour équipement électronique portable.

14. Véhicule (1) selon l'une quelconque des revendications précédentes, ledit véhicule (1) comprenant en outre un dispositif de conduite (23) assurant au moins une fonction de conduite, une fonction d'accélération et une fonction de freinage.

15. Véhicule (1) selon l'une quelconque des revendications précédentes, ledit véhicule (1) comprenant des parois latérales (7a, 7b), ladite assise (25') et/ou ledit support thoracique (27') s'étendant d'une paroi latérale (7a) à l'autre paroi latérale (7b) du véhicule (1).

16. Véhicule (1) selon l'une quelconque des revendications précédentes, dans lequel ledit au moins un siège (11) est destiné à des adultes.

17. Véhicule (1) selon l'une quelconque des revendications précédentes, dans lequel ledit au moins un siège (11) est un siège de conducteur.
